# EUROPEAN PATENT APPLICATION

(11) **EP 4 682 912 A1**
(43) Date of publication of application: **21.01.2026**
(21) Application number: 24774785.0
(22) Date of filing: 13.03.2024
(51) Int. Cl.: H01B 13/00, B09B 3/70, B09B 5/00, B09B 101/16

(54) **METHOD FOR TREATING SULFUR-ATOM-CONTAINING MATERIAL, APPARATUS FOR PRODUCING SULFUR-ATOM-CONTAINING MATERIAL, AND DEVICE AND CONTAINER FOR TRANSPORTING SULFUR-ATOM-CONTAINING MATERIAL**

(30) Priority: 17.03.2023 JP 2023043387
(71) Applicant: Idemitsu Kosan Co.,Ltd., Tokyo 100-8321 (JP)
(72) Inventor: ARAKAWA, Tsuyoshi, Tokyo 100-8321 (JP); TASHIRO, Hironori, Tokyo 100-8321 (JP); YAMAKAWA, Fumio, Tokyo 100-8321 (JP); WASHIDA, Yuuhei, Tokyo 100-8321 (JP)
(74) Representative: Vossius & Partner Patentanwälte Rechtsanwälte mbB
(86) International application number: PCT/JP2024/009725
(87) International publication number: WO 2024/195646

(57) **Abstract**

Provided are a method for treating a sulfur-atom-containing material including bringing at least one sulfur-atom-containing material selected from a raw material containing a sulfur atom, an electrolyte precursor containing a sulfur atom, and a sulfide solid electrolyte into contact with a liquid base oil, and bringing the resulting inclusion containing the sulfur-atom-containing material and the liquid base oil into contact with an alkaline aqueous solution, which can safely and effectively cope with the occurrence of leakage of the sulfur-atom-containing material such as a raw material, an intermediate, and a product containing a sulfur atom; an apparatus for producing the sulfur-atom-containing material; and a device and a container for transporting the sulfur-atom-containing material.

## Description

### Technical Field

The present invention relates to a method for treating a sulfur-atom-containing material, an apparatus for producing a sulfur-atom-containing material, and a device and a container for transporting a sulfur-atom-containing material.

### Background Art

In recent years, with the rapid spread of information-related devices and communication devices, such as personal computers, video cameras, and mobile phones, the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and re-precipitating the solid electrolyte is known (for example, see PTL 1), and further, as a heterogeneous method, a method of reacting a solid electrolyte raw material such as lithium sulfide in a solvent containing a polar aprotic solvent (for example, see PTLs 2 and 3), and moreover, a method for producing a solid electrolyte using a specific compound having an amino group as a complexing agent (for example, see PTL 4) are known.

Since the sulfide solid electrolyte contains a sulfur atom, the sulfide solid electrolyte reacts with moisture or the like in the atmosphere to generate hydrogen sulfide, and since the sulfide solid electrolyte exhibits deliquescence, rapid deterioration of ionic conductivity may occur. On the other hand, a technique of using a sulfide solid electrolyte covered with an insulating oil such as polysiloxanes in a battery container of an all-solid-state battery (for example, see PTL 5), and a composition containing a sulfide solid electrolyte and a water-impermeable matrix present around the sulfide solid electrolyte (for example, see PTL 6) are known. As a technique for safe and reliable detoxification, there is known a technique in which a crushed material obtained by crushing an asbestos-containing waste material is mixed with an oil composition in a liquid state, and the mixture is fired in a firing furnace such as a rotary kiln to detoxify the material (for example, see PTL 7).

### Citation List

### Patent Literature

PTL 1:JP 2014-191899 A
PTL 2:WO 2014/192309 A
PTL 3:WO 2018/054709 A
PTL 4:WO 2020/105737 A
PTL 5:JP 2009-117168 A
PTL 6:JP 2020-136139 A
PTL 7:JP 2008-272543 A

### Summary of Invention

### Technical Problem

The present invention has been made in view of such a situation, and the object of the present invention is to provide a method for treating a sulfur-atom-containing material, an apparatus for producing a sulfur-atom-containing material, and a device and a container for transporting a sulfur-atom-containing material, which can safely and effectively cope with occurrence of leakage of a sulfur-atom-containing material such as a raw material, an intermediate, or a product containing a sulfur atom.

### Solution to Problem

The method for treating a sulfur-atom-containing material according to the present invention is a method for treating a sulfur-atom-containing material, the method including:
bringing at least one sulfur-atom-containing material selected from a raw material containing a sulfur atom, an electrolyte precursor containing a sulfur atom, and a sulfide solid electrolyte into contact with a liquid base oil; and
bringing the resulting inclusion containing the sulfur-atom-containing material and the liquid base oil into contact with an alkaline aqueous solution.

The apparatus for producing a sulfur-atom-containing material according to the present invention is an apparatus for producing a sulfur-atom-containing material, including:
a reactor for a raw material of the sulfur-atom-containing material,
a liquid base oil storage container for storing a liquid base oil, and
an alkaline aqueous solution storage container for storing an alkaline aqueous solution.

The device for transporting a sulfur-atom-containing material according to the present invention is a device for transporting a sulfur-atom-containing material, including:
a storage container A for storing at least one sulfur-atom-containing material selected from a raw material containing a sulfur atom, an electrolyte precursor containing a sulfur atom, and a sulfide solid electrolyte; and
a storage container B for storing a liquid base oil.

The container for transporting a sulfur-atom-containing material according to the present invention is a container for transporting a sulfur-atom-containing material, including at least one storage container selected from
a storage part A for storing at least one sulfur-atom-containing material selected from a raw material containing a sulfur atom, an electrolyte precursor containing a sulfur atom, and a sulfide solid electrolyte; and
a storage part B for storing a liquid base oil.

### Advantageous Effects of Invention

According to the present invention, it is possible to provide a method for treating a sulfur-atom-containing material, an apparatus for producing a sulfur-atom-containing material, and a device and a container for transporting a sulfur-atom-containing material, which can safely and effectively cope with occurrence of leakage of a sulfur-atom-containing material such as a raw material, an intermediate, or a product containing a sulfur atom.

### Brief Description of Drawings

[Fig. 1] Fig. 1 is a schematic view of experimental equipment used in Examples.
[Fig. 2] Fig. 2 is a graph showing temporal changes in the concentration of hydrogen sulfide with time in Examples (1-1) and (1-2).
[Fig. 3] Fig. 3 is a graph showing temporal changes in the concentration of hydrogen sulfide with time in Examples (2-1) and (2-2).
[Fig. 4] Fig. 4 is a graph showing temporal changes in the concentration of hydrogen sulfide with time in Comparative Examples (1-1) and (1-2).
[Fig. 5] Fig. 5 is a graph showing temporal changes in the concentration of hydrogen sulfide with time in Comparative Examples (2-1) and (2-2).
[Fig. 6] Fig. 6 is a graph showing temporal changes in the concentration of hydrogen sulfide with time in Comparative Examples (3-1) and (3-2).
[Fig. 7] Fig. 7 is a graph showing temporal changes in the concentration of hydrogen sulfide with time in Comparative Example (4-1).
[Fig. 8] Fig. 8 is a graph showing temporal changes in the concentration of hydrogen sulfide with time in Comparative Example (4-2).

### Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more desirable to combine the preferred ones with each other.

### (Findings Obtained by the Inventors to Reach the Present Invention)

As a result of intensive studies to solve the above-described problems, the inventors have found the following matters, and have completed the present invention.

As the demand for sulfide solid electrolytes increases, full-scale operations using plant-scale equipments for mass production have been started from lab-scale equipments, and the amount of handling has increased significantly. With an increase in the amount of handling, it is necessary to assume the occurrence of leakage during the production and transportation of materials such as raw materials, intermediates such as slurries containing electrolyte precursors, and products, and to study safe and effective measures. This is particularly true in equipments that handle materials containing sulfur atoms (hereinafter also referred to as "sulfur-atom-containing materials") such as solid electrolyte raw materials such as lithium sulfide and diphosphorus pentasulfide, raw materials of the solid electrolyte raw materials such as lithium sulfate and sulfur, intermediates such as electrolyte precursors, and sulfide solid electrolytes as products. This is because these sulfur-atom-containing materials may react with moisture or the like in the atmosphere to generate hydrogen sulfide.

In addition, the state of these raw materials, intermediates, and products is not limited to powder. For example, in a production apparatus employing a homogeneous method (see, for example, PTLs 2 to 4) which is advantageous for mass production, a slurry containing a solvent and an electrolyte precursor may leak. As described above, it is necessary to cope with various types of leaked substances and states thereof with respect to the occurrence of leakage of the raw material, the intermediate, and the product. The occurrence of leakage is not limited to a plant-scale equipment and may occur in a lab-scale equipment.

The present inventors have focused on the fact that, when leakage of a sulfur-atom-containing material such as a raw material, an intermediate, or a product containing a sulfur atom occurs, these materials are detoxified and deactivated. For example, in order to detoxify and deactivate the sulfide solid electrolyte, a method of bringing the sulfide solid electrolyte into contact with an alkaline aqueous solution containing sodium hydroxide or the like can be exemplified. However, when the sulfur-atom-containing material leaks in the plant equipment, it is desirable to avoid spraying the alkaline aqueous solution to the leaked material as much as possible in consideration of safety. Furthermore, the deactivation of the sulfur-atom-containing material with an alkaline aqueous solution is not a preferable method, considering that a large amount of aqueous solution is required and that a rapid exothermic reaction occurs. On the other hand, the sulfur-atom-containing material may immediately react with moisture or the like in the atmosphere to generate hydrogen sulfide, and in consideration of safety, it cannot be said that it is a preferable method to recover and transport the leaked material and bring the leaked material into contact with the alkaline aqueous solution.

The present inventors have further studied a method for deactivation by detoxification, and have found that a base oil for industrial oils such as a fuel oil base oil, a lubricating oil base oil, and a refrigerant oil base oil, and a liquid base oil such as an oil for business use such as an edible oil are effective. The liquid base oil is easier to handle than the alkaline aqueous solution because of its higher safety, and can be immediately brought into contact with the leaked material. Therefore, the generation of hydrogen sulfide due to the reaction between the sulfur-atom-containing material and moisture or the like in the atmosphere can be suppressed as much as possible. Then, by bringing the sulfur-atom-containing material into contact with an alkaline aqueous solution, not only deactivation of the sulfur-atom-containing material by detoxification but also treatment of the liquid base oil can be performed. Thus, the present inventors have established a method that can safely and effectively cope with the occurrence of leakage of a sulfur-atom-containing material such as a raw material, an intermediate, or a product containing a sulfur atom.

The techniques described in PTLs 5 and 6 focus on the suppression of the generation of hydrogen sulfide when a sulfide solid electrolyte is used in an all-solid-state battery. However, no attention is paid to the measures to be taken when a raw material, an intermediate, or a product containing a sulfur atom leaks, and it is not easy to apply the techniques described in these patent literatures to a technique relating to a treatment method when leakage of a sulfide solid electrolyte or the like occurs.

Further, PTL 7 describes a method of detoxifying using a liquid oil. However, this is a method for suppressing the scattering of asbestos-containing powder dust with respect to the treatment of asbestos contained in an asbestos-containing waste material, and no consideration is given at all to the treatment of a sulfur-atom-containing material. The suppression of the scattering of asbestos-containing powder dust in PTL 7 is to suppress physical harm. In contrast, the treatment method of the present embodiment suppresses the progress of a chemical reaction such as a reaction between a sulfur-atom-containing material and moisture or the like in the atmosphere, and the method described in PTL 7 and the treatment method of the present embodiment focus on completely different phenomena. Therefore, it is not easy to apply the technique described in PTL 7 to a technique relating to a treatment method when leakage of a sulfide solid electrolyte or the like occurs, similarly to PTLs 5 and 6.

As described above, in the related art, there is no proposal at all regarding a method capable of paying attention to the occurrence of leakage of materials such as raw materials, intermediates, and products containing sulfur atoms and coping with the leakage safely and effectively. While the need for countermeasures against the occurrence of leakage is increasing more and more toward mass production of solid electrolytes in the future, it is an urgent problem to be able to safely and effectively cope with the occurrence of leakage of materials such as raw materials, intermediates, and products containing sulfur atoms.

On the other hand, according to the method for treating a sulfur-atom-containing material, the apparatus for producing a sulfur-atom-containing material, and the device and the container for transporting a sulfur-atom-containing material according to the present invention, it is possible to solve these urgent problems.

### (Regarding Various Aspects of the Present Embodiment)

The method for treating a sulfur-atom-containing material according to a first aspect of the present embodiment is a method for treating a sulfur-atom-containing material, including: bringing at least one sulfur-atom-containing material selected from a raw material containing a sulfur atom, an electrolyte precursor containing a sulfur atom, and a sulfide solid electrolyte into contact with a liquid base oil; and bringing the resulting inclusion containing the sulfur-atom-containing material and the liquid base oil into contact with an alkaline aqueous solution.

In the method for treating a sulfur-atom-containing material of the present embodiment, the solid electrolyte raw materials, the electrolyte precursors, and the sulfide solid electrolytes, which are the sulfur-atom-containing materials, are not limited to those in the form of powder, and include, for example, those in the form of slurry with solvents used in the production process of the sulfide solid electrolytes. That is, the treatment method of the present embodiment is a method capable of coping with various states of the solid electrolyte raw materials, the electrolyte precursors, and the sulfide solid electrolytes.

Here, the "solid electrolyte" is a solid electrolyte having ionic conductivity due to a lithium atom, and the "sulfide solid electrolyte" is a solid electrolyte containing at least a lithium atom, a phosphorus atom, and a sulfur atom.

The "sulfide solid electrolyte" includes both an amorphous sulfide solid electrolyte and a crystalline sulfide solid electrolyte.

In the description herein, the crystalline sulfide solid electrolyte is a sulfide solid electrolyte in which a peak derived from the solid electrolyte is observed in an X-ray diffraction pattern in X-ray diffractometry, and the presence or absence of a peak derived from a raw material of the sulfide solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte. Therefore, the crystalline sulfide solid electrolyte includes a so-called glass ceramic obtained by heating an amorphous sulfide solid electrolyte to a crystallization temperature or higher.

In addition, in the description herein, the amorphous sulfide solid electrolyte has a halo pattern in which a peak other than a peak derived from a material is not substantially observed in an X-ray diffraction pattern by an X-ray diffractometry, and the presence or absence of a peak derived from a raw material of the sulfide solid electrolyte does not matter.

In addition, the "electrolyte precursor" is a precursor of a sulfide solid electrolyte obtained in a production process of the sulfide solid electrolyte, and is different from a solid electrolyte raw material such as lithium sulfide or phosphorus sulfide, and is also different from the sulfide solid electrolyte. For example, in the case where it is different from a solid electrolyte raw material generated by performing some processing on the solid electrolyte raw material (for example, processing such as mixing and pulverization of the solid electrolyte raw material in the presence or absence of a solvent), is also different from a sulfide solid electrolyte, and can become a sulfide solid electrolyte by further performing some processing (for example, drying, heating, or the like), it corresponds to the "electrolyte precursor". An example thereof includes a product obtained by a reaction between the solid electrolyte raw material and a complexing agent such as a solvent containing a heteroatom such as a nitrogen atom or an oxygen atom. The presence of the "electrolyte precursor" can be confirmed, for example, by analyzing the "electrolyte precursor" by FT-IR (diffuse reflectance method), by detecting a peak different from that of the raw materials and the sulfide solid electrolyte, and by detecting a similar peak by powder X-ray diffraction (XRD) measurement. As described above, since the "electrolyte precursor" exhibits a predetermined peak, it is considered that the "electrolyte precursor" is a complex formed by the solid electrolyte raw material via a complexing agent such as a solvent containing a heteroatom.

As described above, in the treatment method of the present embodiment, first, by bringing the sulfur-atom-containing material and the liquid base oil into contact with each other, generation of hydrogen sulfide due to a reaction between the sulfur-atom-containing material and moisture or the like in the atmosphere is suppressed as much as possible, and then, by bringing the sulfur-atom-containing material into contact with the alkaline aqueous solution, deactivation of the sulfur-atom-containing material by detoxification and treatment of the liquid base oil can be performed.

In the treatment method of the present embodiment, hydrogen sulfide generated from the sulfur-atom-containing material can be immediately suppressed, and then the deactivation of the sulfur-atom-containing material by detoxification and the treatment of the liquid base oil used for suppressing the generation of hydrogen sulfide can be performed. Therefore, the treatment method of the present embodiment can be a method for safely and effectively coping with and treating the occurrence of leakage of the sulfur-atom-containing material.

The method for treating a sulfur-atom-containing material according to a second aspect of the present embodiment is the method for treating a sulfur-atom-containing material according to the first aspect, in which the liquid base oil is at least one base oil selected from a base oil for a fuel oil, a base oil for a lubricating oil, and an edible oil.

By adopting at least one base oil selected from a base oil for a fuel oil, a base oil for a lubricating oil, and an edible oil as the liquid base oil used in the treatment method of the present embodiment, it is possible to cope with and treat the leaked sulfur-atom-containing material more safely and efficiently. Here, the "liquid" means a fluid having fluidity, and is preferably a fluid having a kinematic viscosity at an ambient temperature of 460 mm²/s or less, more preferably 90 mm²/s or less, and still more preferably 35 mm²/s or less. The kinematic viscosity is a kinematic viscosity measured in accordance with the method specified in JIS K2283:2000 (Crude petroleum and petroleum products-Determination of kinematic viscosity and calculation of viscosity index from kinematic viscosity).

The method for treating a sulfur-atom-containing material according to a third aspect of the present embodiment is a method for treating a sulfur-atom-containing material according to the first or second aspect, in which in the bringing the sulfur-atom-containing material into contact with the liquid base oil, the liquid base oil is brought into contact by spraying or sprinkling.

The sulfur-atom-containing material usually leaks to the ground, for example, in a plant equipment such as an apparatus for producing a sulfide solid electrolyte. In addition, for example, when a sulfur-atom-containing material is leaked from a storage place during transportation of a compound containing a sulfur atom such as lithium sulfide or phosphorus sulfide which is a solid electrolyte raw material or transportation of a sulfide solid electrolyte as a product, the material is leaked to the periphery of a device or a container for the transportation.

In consideration of these situations and in consideration of the case where the treatment of the sulfur-atom-containing material is urgent, the liquid base oil is sprayed or sprinkled on the sulfur-atom-containing material leaked to the ground or the like, which is effective for safely and efficiently coping with and treating the leaked sulfur-atom-containing material.

The method for treating a sulfur-atom-containing material according to a fourth aspect of the present embodiment is the method for treating a sulfur-atom-containing material according to the first or second aspect, in which in the bringing the sulfur-atom-containing material into contact with the liquid base oil, the sulfur-atom-containing material is immersed in and brought into contact with the liquid base oil.

In the case of the treatment method of the third aspect, emergency treatment of the sulfur-atom-containing material leaked to the ground is mainly assumed, and therefore, an operation of recovering the inclusion containing the sulfur-atom-containing material and the liquid base oil, and further the inclusion containing the alkaline aqueous solution in the case of spraying or sprinkling the alkaline aqueous solution is required. However, in the non-urgent case, for example, when the sulfur-atom-containing material is in the form of a slurry and thus the generation of hydrogen sulfide due to the reaction between the sulfur-atom-containing material and moisture or the like in the atmosphere does not immediately occur, the work efficiency as a whole is improved by recovering the leaked sulfur-atom-containing material and then immersing it in the liquid base oil.

As described above, in the treatment method of the present embodiment, the method of bringing the sulfur-atom-containing material and the liquid base oil into contact with each other can be selected depending on the presence or absence of urgency.

The method for treating a sulfur-atom-containing material according to a fifth aspect of the present embodiment is the method for treating a sulfur-atom-containing material according to any one of the first to fourth aspects, in which in the bringing the sulfur-atom-containing material into contact with the liquid base oil, an amount of the liquid base oil used with respect to 0.1 L of the sulfur-atom-containing material is 0.1 L or more and 20 L or less.

By setting the amount of the liquid base oil used within the above range, it is possible to cope with and treat the leaked sulfur-atom-containing material more safely and efficiently.

The method for treating a sulfur-atom-containing material according to a sixth aspect of the present embodiment is the method for treating a sulfur-atom-containing material according to any one of the first to fifth aspects, in which the alkaline aqueous solution is an aqueous solution of at least one compound selected from a hydroxide and a carbonate of an alkali metal, and a hydroxide of an alkaline earth metal.

By adopting the aqueous solution as the alkaline aqueous solution, it is possible to cope with and treat the leaked sulfur-atom-containing material more safely and efficiently.

The method for treating a sulfur-atom-containing material according to a seventh aspect of the present embodiment is the method for treating a sulfur-atom-containing material according to any one of the first to sixth aspects, in which in the bringing the inclusion into contact with the alkaline aqueous solution, the inclusion and the alkaline aqueous solution are mixed.

The method of bringing the inclusion, that is, the inclusion containing the sulfur-atom-containing material and the liquid base oil, which is obtained by bringing the sulfur-atom-containing material and the liquid base oil into contact with each other, into contact with the alkaline aqueous solution is not particularly limited as long as the inclusion can be brought into contact with the alkaline aqueous solution, and it is preferable to mix the inclusion with the alkaline aqueous solution particularly from the viewpoint of safety. In addition, the inclusion and the alkaline aqueous solution can be more efficiently brought into contact with each other.

The method for treating a sulfur-atom-containing material according to an eighth aspect of the present embodiment is the method for treating a sulfur-atom-containing material according to any one of the first to seventh aspects, in which a contact inclusion obtained by bringing the inclusion into contact with the alkaline aqueous solution is discarded.

According to the treatment method of the present embodiment, by bringing the inclusion into contact with the alkaline aqueous solution, it is possible to perform deactivation of the sulfur-atom-containing material by detoxification and treatment of the liquid base oil. It is preferable to discard the contact inclusion obtained by the contact between the inclusion and the alkaline aqueous solution. Since the contact inclusion is subjected to deactivation of the sulfur-atom-containing material by detoxification and treatment of the liquid base oil, the leaked sulfur-atom-containing material can be discarded safely and efficiently.

The apparatus for producing a sulfur-atom-containing material according to a ninth aspect of the present embodiment includes a reactor for a raw material of the sulfur-atom-containing material, a liquid base oil storage container for storing a liquid base oil, and an alkaline aqueous solution storage container for storing an alkaline aqueous solution; the apparatus for producing a sulfur-atom-containing material according to a tenth aspect is the apparatus for producing a sulfur-atom-containing material according to the ninth aspect, further including at least one jig selected from a jig for spraying or sprinkling a liquid base oil and a jig for spraying or sprinkling an alkaline aqueous solution; and the apparatus for producing a sulfur-atom-containing material according to an eleventh aspect is the apparatus for producing a sulfur-atom-containing material according to the ninth or tenth aspect, further including a hydrogen sulfide detection device.

The apparatus for producing a sulfur-atom-containing material of the present embodiment includes a liquid base oil storage container and an alkaline aqueous solution storage container in addition to a reaction for a raw material of the sulfur-atom-containing material. The raw material of the sulfur-atom-containing material becomes a sulfur-atom-containing material by reacting, and examples thereof include a raw material used for producing a sulfide solid electrolyte (which may also be referred to as a "solid electrolyte raw material"), and a raw material for producing a raw material used for producing the sulfide solid electrolyte (solid electrolyte raw material).

With such a configuration, the production apparatus of the present embodiment can safely and efficiently cope with and treat a case where a raw material used for producing a raw material of a sulfide solid electrolyte such as lithium sulfate or sulfur, a solid electrolyte raw material such as lithium sulfide or diphosphorus pentasulfide, an intermediate such as an electrolyte precursor, or a sulfur-atom-containing material such as a sulfide solid electrolyte to be a product leaks in the reactor.

Further, by providing at least one jig selected from a jig for spraying or sprinkling a liquid base oil and a jig for spraying or sprinkling an alkaline aqueous solution, it is possible to more safely and efficiently cope with and treat the leaked sulfur-atom-containing material.

In addition, providing a hydrogen sulfide detection device is particularly effective in terms of safety.

The device for transporting a sulfur-atom-containing material according to a twelfth aspect of the present embodiment is a device for transporting a sulfur-atom-containing material, including: a storage container A for storing at least one sulfur-atom-containing material selected from a raw material containing a sulfur atom, an electrolyte precursor containing a sulfur atom, and a sulfide solid electrolyte; and a storage container B for storing a liquid base oil.

The device for transporting a sulfur-atom-containing material of the present embodiment can be used as a transporting device for safely transporting a sulfur-atom-containing material by being provided with a storage container A for storing the sulfur-atom-containing material and a storage container B for storing a liquid base oil.

The container for transporting a sulfur-atom-containing material according to a thirteenth aspect of the present embodiment is a container for transporting a sulfur-atom-containing material, including at least one storage container selected from a storage part A for storing at least one sulfur-atom-containing material selected from a raw material containing a sulfur atom, an electrolyte precursor containing a sulfur atom, and a sulfide solid electrolyte; and a storage part B for storing a liquid base oil.

The container for transporting a sulfur-atom-containing material of the present embodiment can be used as a container for safely transporting a sulfur-atom-containing material by being provided with a storage part A for storing the sulfur-atom-containing material and a storage part B for storing a liquid base oil.

### [Bringing Sulfur-Atom-Containing Material into Contact with Liquid Base oil]

The method for treating a sulfur-atom-containing material of the present embodiment includes bringing at least one sulfur-atom-containing material selected from a raw material containing a sulfur atom, an electrolyte precursor containing a sulfur atom, and a sulfide solid electrolyte into contact with a liquid base oil. First, the bringing a sulfur-atom-containing material into contact with a liquid base oil will be described.

### [Method for Treating Sulfur-Atom-Containing Material]

The method for treating a sulfur-atom-containing material of the present embodiment is a method for treating a sulfur-atom-containing material, the method including:
bringing at least one sulfur-atom-containing material selected from a raw material containing a sulfur atom, an electrolyte precursor containing a sulfur atom, and a sulfide solid electrolyte into contact with a liquid base oil; and
bringing the resulting inclusion containing the sulfur-atom-containing material and the liquid base oil into contact with an alkaline aqueous solution. Hereinafter, a processing method of the present embodiment will be described.

### (Sulfur-Atom-Containing Material)

The sulfur-atom-containing material to be treated in the treatment method of the present embodiment is a raw material containing a sulfur atom, an electrolyte precursor containing a sulfur atom, and a sulfide solid electrolyte.

### (Raw Material)

The raw material contains a sulfur atom, and examples thereof include a substance (solid electrolyte raw material) serving as a raw material used for production of a sulfide solid electrolyte, and a substance used as a raw material for producing a raw material (solid electrolyte raw material) used for production of the sulfide solid electrolyte. Examples of such a raw material include a substance containing at least one atom selected from a lithium atom, a sulfur atom, and a phosphorus atom, and a substance containing at least one atom selected from a lithium atom, a sulfur atom, a phosphorus atom, and a halogen atom.

Specific examples of the substance containing a sulfur atom used for the production of a sulfide solid electrolyte, i.e., the substance that can serve as a solid electrolyte raw material, include lithium sulfide; phosphorus sulfides such as diphosphorus trisulfide (P₂S₃) and diphosphorus pentasulfide (P₂S₅); and thiophosphoryl halides such as thiophosphoryl fluoride (PSF₃), thiophosphoryl chloride (PSCl₃), thiophosphoryl bromide (PSBr₃), thiophosphoryl iodide (PSI₃), thiophosphoryl dichlorofluoride (PSCl₂F), and thiophosphoryl dibromofluoride (PSBr₂F). In addition, examples thereof also include alkali metal sulfides such as sodium sulfide, potassium sulfide, rubidium sulfide, and cesium sulfide; and metal sulfides such as silicon sulfide, germanium sulfide, boron sulfide, gallium sulfide, tin sulfide (SnS, SnS₂), aluminum sulfide, and zinc sulfide.

Examples of the substance used for producing the solid electrolyte raw material include lithium sulfate, lithium hydrosulfide, and sulfur.

Examples of sulfur-free substances other than the above-mentioned raw materials, that can be used as raw materials for sulfide solid electrolytes include sulfur-free substances containing at least one atom selected from the above four kinds of atoms, more specifically, raw materials composed of at least two atoms selected from the above four kinds of atoms, such as lithium halides such as lithium fluoride, lithium chloride, lithium bromide, and lithium iodide; and phosphorus halides such as various phosphorus fluorides (PF₃ and PF₅), various phosphorus chlorides (PCl₃, PCl₅, and P₂Cl₄), various phosphorus bromides (PBr₃ and PBr₅), and various phosphorus iodides (PI₃ and P₂I₄); and substances such as halogen simple substances such as bromine (Br₂) and iodine (I₂).

In addition, examples thereof include substances containing at least one atom selected from the above four kinds of atoms and containing an atom other than the four kinds of atoms, more specifically, lithium compounds such as lithium oxide, lithium hydroxide, and lithium carbonate; phosphate compounds such as sodium phosphate and lithium phosphate; halides of alkali metals other than lithium such as sodium halides such as sodium iodide, sodium fluoride, sodium chloride, and sodium bromide; halogenated metals such as aluminum halides, silicon halides, germanium halides, arsenic halides, selenium halides, tin halides, antimony halides, tellurium halides, and bismuth halides; and phosphorus oxyhalides such as phosphorus oxychloride (POCl₃) and phosphorus oxybromide (POBr₃). Among the substances exemplified above, the lithium compound can also be used as a substance used for producing a solid electrolyte raw material.

In the treatment method of the present embodiment, as the solid electrolyte raw material, a case where the above-described various substances are used alone or a case where two or more kinds thereof are used in combination, that is, a case where the above-described solid electrolyte raw material is leaked alone or a case where two or more kinds of the above-described solid electrolyte raw materials are leaked are considered.

Typical examples of the solid electrolyte raw material in a case where two or more kinds of materials are leaked in the production of the sulfide solid electrolyte include a combination of lithium sulfide and phosphorus sulfide, a combination of lithium sulfide, phosphorus sulfide, and lithium halide, a combination of lithium sulfide, phosphorus sulfide, and a halogen simple substance, and a combination of lithium sulfide, phosphorus sulfide, lithium halide, and a halogen simple substance.

### (Electrolyte Precursor)

As described above, the electrolyte precursor refers to a precursor of the sulfide solid electrolyte obtained in the production process of the sulfide solid electrolyte, and is considered to be a complex formed by the solid electrolyte raw materials through a complexing agent such as a solvent containing a heteroatom since a predetermined peak appears. That is, the case where the electrolyte precursor is the target of the treatment method is the case where the method for producing a sulfide solid electrolyte including reacting the solid electrolyte raw materials using the complexing agent is adopted.

The solid electrolyte raw material for forming the electrolyte precursor contains a solid electrolyte raw material necessary for forming the sulfide solid electrolyte. Therefore, the solid electrolyte raw material for forming the electrolyte precursor is a combination of a plurality of substances exemplified as the solid electrolyte raw material, that is, a combination of lithium sulfide and phosphorus sulfide, a combination of lithium sulfide, phosphorus sulfide, and lithium halide, a combination of lithium sulfide, phosphorus sulfide, and a halogen simple substance, a combination of lithium sulfide, phosphorus sulfide, lithium halide, and a halogen simple substance, or the like.

The solvent containing a heteroatom is a solvent having properties of easily forming a complex via the solid electrolyte raw material, and is a solvent that can also be referred to as a complexing agent.

Preferred examples of the heteroatom contained in the complexing agent include an oxygen atom, a nitrogen atom, a sulfur atom, a chlorine atom, and a phosphorus atom, with an oxygen atom and a nitrogen atom being preferable. The solvent containing a heteroatom may contain one kind of these heteroatoms or a plurality of kinds of these heteroatoms.

Examples of the solvent containing such a heteroatom include a solvent containing an oxygen atom, such as an alcohol solvent, an ether solvent, an ester solvent, an aldehyde solvent, and a ketone solvent; a solvent containing a nitrogen atom, such as an amine solvent and a nitrile solvent; and a solvent containing an oxygen atom and a nitrogen atom, such as an amide solvent. Among these, an alcohol solvent and an ether solvent are preferable as the solvent containing an oxygen atom, and an amine solvent is preferable as the solvent containing a nitrogen atom.

### (Sulfide Solid Electrolyte)

As described above, the sulfide solid electrolyte is a solid electrolyte containing at least a lithium atom, a phosphorus atom, and a sulfur atom, and a solid electrolyte further containing a halogen atom is also preferable.

In the treatment method of the present embodiment, the sulfide solid electrolyte to be treated may be either an amorphous sulfide solid electrolyte or a crystalline sulfide solid electrolyte.

Typical examples of the amorphous sulfide solid electrolytes include solid electrolytes composed of lithium sulfide, phosphorus sulfide, and further lithium halide, such as Li₂S-P₂S₅, Li₂S-P₂S₅-LiI, Li₂S-P₂S₅-LiCl, Li₂S-P₂S₅-LiBr, and Li₂S-P₂S₅-LiI-LiBr; and solid electrolytes further containing other atoms such as an oxygen atom and a silicon atom, such as Li₂S-P₂S₅-Li₂O-LiI and Li₂S-SiS₂-P₂S₅-LiI.

The types of atoms constituting the sulfide solid electrolyte can be determined by, for example, an ICP emission spectrophotometer.

In addition, the crystalline sulfide solid electrolyte may be a so-called glass ceramic obtained by heating an amorphous sulfide solid electrolyte to a crystallization temperature or higher.

Typical examples of the crystalline sulfide solid electrolyte include a Li₃PS₄ crystal structure, a Li₄P₂S₆ crystal structure, a Li₇PS₆ crystal structure, a Li₇P₃S₁₁ crystal structure, and a crystal structure having peaks in the vicinity of 20 = 20.2° and in the vicinity of 2θ = 23.6° (for example, JP 2013-16423 A).

Examples of the crystalline sulfide solid electrolyte also include a crystalline sulfide solid electrolyte having a thio-LISICON Region II type crystal structure. Examples of the compositional formula of the thio-LISICON Region II type crystal structure include a Li₄₋ₓGe₁₋ₓPₓS₄ system thio-LISICON Region II type crystal structure (see Kanno et al., Journal of The Electrochemical Society, 148 (7) A742-746 (2001)), and a crystal structure similar to the Li₄₋ₓGe₁₋ₓPₓS₄ system thio-LISICON Region II type (see Solid State Ionics, 177 (2006), 2721-2725).

In addition, examples thereof also include a crystalline sulfide solid electrolyte having the argyrodite type crystal structure having the structural skeleton of the above-described Li₇PS₆, in which a part of P is substituted with Si. Examples of the compositional formula of the argyrodite type crystal structure include a crystal structure represented by Li₇₋ₓP_{1-y}Si_{y}S₆ and Li₇₊ₓP_{1-y}Si_{y}S₆ (x is -0.6 to 0.6, and y is 0.1 to 0.6), a crystal structure represented by Li_{7-x-2y}PS_{6-x-y}Clₓ (0.8 ≤ x ≤ 1.7, 0 < y ≤ -0.25x + 0.5), and Li₇₋ₓPS₆₋ₓHaₓ (Ha is Cl or Br, and x is preferably 0.2 to 1.8).

### (Liquid Base oil)

As the liquid base oil used in the treatment method of the present embodiment, any oil which is liquid and is generally called an base oil can be used without particular limitation. As the liquid base oil, for example, a base oil for a fuel oil, a base oil for a lubricating oil, an edible oil are preferably exemplified in consideration of more safely and efficiently coping with and treating the leaked sulfur-atom-containing material and availability. Considering that these liquid base oils are used for the treatment of the sulfur-atom-containing material after use, they are also preferred from the viewpoint of cost. As the liquid base oil, one type of base oil may be used alone, or a plurality of types may be used in combination.

The properties of the liquid base oil are required to be in a liquid state as described above, and the liquid base oil preferably has the above-described kinematic viscosity. That is, in the treatment method of the present embodiment, preferably by having a predetermined kinematic viscosity at a temperature (ambient temperature) at a place where the liquid base oil is used, it is possible to more safely and efficiently cope with and treat the leaked sulfur-atom-containing material.

Examples of the base oil for a fuel oil include various oils such as automobile gasoline, jet fuel, kerosene, light oil, and heavy oil. Examples of the base oil for a lubricating oil include lubricating oils for engines for vehicles, ships, and the like; machine oils such as refrigerating machine oils, turbine oils, gear oils, and hydraulic oils; metal working oils; and electrical insulating oils.

Examples of the edible oil include vegetable oils such as linseed oil, safflower oil, sunflower oil, soy bean oil, corn oil, cotton seed oil, sesame seed oil, olive oil, castor oil, peanut oil, coconut oil, palm kernel oil, rapeseed oil, and rice bran oil; animal oils such as beef tallow, lard, mutton tallow, whale oil, fish oils, and liver oils; and waste edible oils after use of these vegetable oils and animal oils. The waste edible oil may be subjected to a purification treatment such as distillation or clay treatment.

Since the treatment method of the present embodiment is merely intended for treatment, preferably discard, of a sulfur-atom-containing material, the liquid base oil as described above is preferably selected in consideration of cost and the like. On the other hand, for example, the techniques described in PTLs 5 and 6 focus on suppression of hydrogen sulfide and suppression of deterioration in the atmosphere when a sulfide solid electrolyte is used in an all-solid-state battery. That is, it is assumed to be used in an all-solid-state battery together with a sulfide solid electrolyte. Therefore, as a substance that does not deteriorate the performance of the all-solid-state battery, a special material such as an insulating oil such as polysiloxanes in PTL 5, or a moisture-impermeable matrix containing an additive that has a double bond or a triple bond and does not exhibit reactivity with the sulfide solid electrolyte in PTL 6 is adopted.

Since the liquid base oil that can be adopted in the treatment method of the present embodiment is assumed to be treated, preferably discarded, the special materials adopted in the techniques described in PTLs 5 and 6 are not preferable materials in terms of cost, safety, and the like. On the other hand, it is difficult to assume that the liquid base oil that can be adopted in the treatment method of the present embodiment, in particular, a base material based on a mineral oil containing a plurality of fractions such as a base oil for a fuel oil and a base oil for a lubricating oil, or a base material such as a waste edible oil is used in the techniques described in PTLs 5 and 6.

As described above, the techniques described in PTLs 5 and 6, in which it is assumed that a fluid such as an insulating oil applied to a sulfide solid electrolyte is also used as it is in an all-solid-state battery, and the treatment method of the present embodiment, in which it is assumed that a liquid base oil is treated, preferably discarded, after use, may be common in that a powder such as a sulfide solid electrolyte is coated with a fluid, but can be said to belong to completely different technical fields.

### (Contact between Sulfur-Atom-Containing Material and Liquid Base oil)

The method of bringing the sulfur-atom-containing material and the liquid base oil into contact with each other is not particularly limited as long as they are brought into contact with each other, and any method can be adopted. From the viewpoint of coping with and treating the leaked sulfur-atom-containing material more safely and efficiently, it is preferable to bring the sulfur-atom-containing material into contact with the liquid base oil by any one of the following (i) and (ii).
(i) Bringing the sulfur-atom-containing material into contact with the liquid base oil by spraying or sprinkling the liquid base oil
(ii) Bringing the sulfur-atom-containing material into contact with the liquid base oil by immersion

As described above, the contact method (i) may be adopted when the treatment of the sulfur-atom-containing material requires urgency, and the contact method (ii) may be adopted when the treatment of the sulfur-atom-containing material does not require urgency. In the treatment method of the present embodiment, the method of bringing the sulfur-atom-containing material and the liquid base oil into contact with each other can be selected depending on the presence or absence of urgency.

In the case of the contact method (i), a jig for spraying or sprinkling the liquid base oil may be used. The jig is not particularly limited as long as the jig can spray or sprinkle the liquid base oil, and for example, various devices such as an accumulator-type sprayer and an oil sprinkler, and a hose (which may be provided with a nozzle) can be used.

In the case of the contact method (ii), the sulfur-atom-containing material can be charged into a storage tank for storing the liquid base oil. The storage tank may be equipped with a stirring blade in order to promote the contact between the liquid base oil and the sulfur-atom-containing material. That is, a mixing tank equipped with a stirring blade may be used as the storage tank. In consideration of the contact of the inclusion with the alkaline aqueous solution as described later, a mixing tank is preferably used.

In addition, the liquid base oil may be supplied after the sulfur-atom-containing material is charged into the storage tank or the mixing tank.

### (Amount of Liquid Base oil Used)

The amount of the liquid base oil used is not particularly limited as long as the sulfur-atom-containing material and the liquid base oil can be sufficiently brought into contact with each other, and from the viewpoint of coping with and treating the leaked sulfur-atom-containing material more safely and efficiently, the amount of the liquid base oil used is preferably 0.1 L or more, more preferably 0.2 L or more, and still more preferably 0.3 L or more, and the upper limit thereof is preferably 20 L or less, more preferably 15 L or less, and still more preferably 10 L or less, with respect to 0.1 L of the sulfur-atom-containing material. The numerical range is typically preferably 0.1 L or more and 20 L or less, 0.1 L or more and 15 L or less, 0.1 L or more and 10 L or less, 0.2 L or more and 20 L or less, 0.2 L or more and 15 L or less, 0.2 L or more and 10 L or less, 0.3 L or more and 20 L or less, 0.3 L or more and 15 L or less, or 0.3 L or more and 10 L or less. In addition, when the amount used is set as described above, the sulfur-atom-containing material and the liquid base oil can be brought into contact with each other in a shorter time.

### [Bringing Inclusion into Contact with Alkaline Aqueous Solution]

The treatment method of the present embodiment includes bringing an inclusion containing a sulfur-atom-containing material and a liquid base oil obtained by bringing the sulfur-atom-containing material and the liquid base oil into contact with each other into contact with an alkaline aqueous solution.

### (Alkaline Aqueous Solution)

The alkaline aqueous solution used in the treatment method of the present embodiment is not particularly limited as long as it is an aqueous solution exhibiting alkalinity. The alkaline aqueous solution is preferably an aqueous solution of a compound such as a hydroxide or carbonate of an alkali metal or a hydroxide of an alkaline earth metal, from the viewpoint of coping with and treating the leaked sulfur-atom-containing material more safely and efficiently and from the viewpoint of easy availability. These compounds can be used alone or in combination of a plurality of kinds thereof.

As the alkali metal, sodium and potassium are preferable, and sodium is more preferable. As the alkaline earth metal, calcium and magnesium are preferable. Hydroxides are also preferred.

More specifically, an aqueous solution of a hydroxide of an alkali metal such as sodium hydroxide or potassium hydroxide; a carbonate of an alkali metal such as sodium carbonate or potassium carbonate; or a hydroxide of an alkaline earth metal such as calcium hydroxide or magnesium hydroxide is preferably exemplified, an aqueous solution of sodium hydroxide or sodium carbonate is more preferred, and an aqueous solution of sodium hydroxide is still more preferred.

The content of the compound contained in the alkaline aqueous solution is not particularly limited as long as it is a content at which the liquid base oil used for deactivation due to detoxification of the sulfur-atom-containing material contained in the inclusion and suppression of generation of hydrogen sulfide can be treated by bringing the compound into contact with the inclusion. In consideration of coping with and treating the leaked sulfur-atom-containing material more safely and efficiently, the content of the compound contained in the alkaline aqueous solution is preferably 0.1% by mass or more, more preferably 1% by mass or more, and still more preferably 3% by mass or more, and the upper limit thereof is preferably 10% by mass or less, more preferably 8% by mass or less, and still more preferably 6% by mass or less.

### (Contact between Inclusion and Alkaline Aqueous Solution)

The method of bringing the inclusion containing the sulfur-atom-containing material and the liquid base oil into contact with the alkaline aqueous solution is not particularly limited as long as they are brought into contact with each other, and any method can be adopted. From the viewpoint of coping with and treating the leaked sulfur-atom-containing material more safely and efficiently, it is preferable to bring the inclusion into contact with the alkaline aqueous solution by any one of the following (iii) and (iv).
(iii) Mixing the inclusion with the alkaline aqueous solution
(iv) Bringing the inclusion into contact with the alkaline aqueous solution by spraying or sprinkling the alkaline aqueous solution

The contact method (iii) is more preferable than the method (iv) in terms of safety, and the contact between the inclusion and the alkaline aqueous solution can be achieved more efficiently.

When the contact method (iii) is adopted in combination with the contact method (ii) for the contact between the sulfur-atom-containing material and the liquid base oil, the leaked sulfur-atom-containing material can be coped with and treated more easily, safely, and efficiently. This is because after the sulfur-atom-containing material is immersed in and brought into contact with the liquid base oil using, for example, a storage tank or a mixing tank by the contact method (ii), the alkaline aqueous solution may be supplied to the storage tank or the mixing tank.

Even in a case where the contact method (i) is adopted, when the contact method (iii) is adopted, the leaked sulfur-atom-containing material can be coped with and treated more easily, safely, and efficiently. In this case, an inclusion containing the sulfur-atom-containing material and the liquid base oil may be recovered by the contact method (i), and the inclusion may be charged into a mixing tank and mixed with the alkaline aqueous solution.

When detoxification of the sulfur-atom-containing material is urgently required, the contact method (iv) is effective. The spraying or sprinkling of the alkaline aqueous solution can be performed using a jig for spraying or sprinkling the alkaline aqueous solution. As the jig used for spraying or sprinkling the alkaline aqueous solution, there may be used, for example, a device mentioned as the jig that can be used for spraying or sprinkling the liquid base oil.

The contact inclusion obtained by the contact of the inclusion containing the sulfur-atom-containing material and the liquid base oil with the alkaline aqueous solution is preferably discarded. The contact inclusion has been subjected to detoxification of the sulfur-atom-containing material and to treatment of the liquid base oil. Therefore, it is possible to safely and efficiently discard the leaked sulfur-atom-containing material as a contact inclusion.

### [Apparatus for Producing Sulfur-Atom-Containing Material]

The apparatus for producing a sulfur-atom-containing material of the present embodiment is an apparatus including a reactor for a raw material of the sulfur-atom-containing material, a liquid base oil storage container for storing a liquid base oil, and an alkaline aqueous solution storage container for storing an alkaline aqueous solution.

When at least the reactor, the liquid base oil storage container, and the alkaline aqueous solution storage container are provided, it is possible to safely and effectively cope with the occurrence of leakage of a substance used as a raw material for producing a raw material used in the production of the sulfide solid electrolyte, or a sulfur-atom-containing material such as a solid electrolyte raw material and an electrolyte precursor that may be present in the production stage of the sulfide solid electrolyte, and a product (sulfide solid electrolyte).

As described above, the sulfur-atom-containing material produced in the production apparatus is at least one selected from a raw material containing a sulfur atom, an electrolyte precursor containing a sulfur atom, and a sulfide solid electrolyte, and is preferably a raw material containing a sulfur atom and a sulfide solid electrolyte. Preferred examples of the raw material containing a sulfur atom include solid electrolyte raw materials containing a sulfur atom, such as lithium sulfide and diphosphorus pentasulfide.

### (Reactor for Raw Material of Sulfur-Atom-Containing Material)

Examples of the raw material of the sulfur-atom-containing material to be reacted in the reactor preferably include a substance containing a sulfur atom such as a substance serving as a raw material used for producing a sulfide solid electrolyte (solid electrolyte raw material) and a substance serving as a raw material for producing a raw material used for producing the sulfide solid electrolyte (solid electrolyte raw material).

The reactor for the raw materials of the sulfur-atom-containing material is not particularly limited as long as it is an apparatus capable of reacting the raw materials of the sulfur-atom-containing material to produce raw materials (solid-electrolyte raw materials) used in the production of sulfide solid electrolytes or sulfide solid electrolytes. For example, the reaction of the solid-electrolyte raw materials at the time of producing the sulfide solid electrolytes may be performed by a known method such as a mechanical milling method, a melt-cooling method, or a slurry method (including a solution method), and an apparatus corresponding to these methods may be used.

For example, in a case where a mechanical milling method is adopted, at least a pulverizer such as a ball mill or a bead mill, and, if necessary, various heating devices for performing heating for crystallization or the like, such as a hot plate, a vacuum heating device, an argon gas atmosphere furnace, a firing furnace, or a vacuum firing furnace, may be provided.

In a case where a melt quenching method is adopted, at least various heating devices such as an argon gas atmosphere furnace, a firing furnace, and a vacuum firing furnace for the reaction of the solid electrolyte raw material, and a quenching tank for quenching the fired product fired by these heating devices, may be provided.

In a case where a slurry method (including a solution method) is adopted, for example, when the solid electrolyte raw materials are reacted while being mixed in the solvent (complexing agent) containing a heteroatom, a mixing tank provided with a stirring blade for generating a mixture (slurry) containing the electrolyte precursor and the residual complexing agent by the reaction of the solid electrolyte raw materials and the complexing agent, various dryers such as a horizontal dryer and a horizontal vibrating flow dryer for removing the residual complexing agent from the mixture (slurry), a heating device for removing the complexing agent from the electrolyte precursor, a heating device for crystallization or the like, and the like may be provided.

Examples of the heating device for removing the complexing agent from the electrolyte precursor and the heating device for crystallization or the like include a hot plate, a vacuum heating device, an argon gas atmosphere furnace, a firing furnace, and a vacuum firing furnace, though depending on the treatment scale. These heating devices may be shared.

In addition, the reactor may be equipped with a pulverizer, a classifier, or the like for particle size adjustment such as atomization.

The reaction of the substances as the raw materials for producing the solid electrolyte raw material can be performed while mixing the substances, if necessary, in the presence of a solvent, for example, in a reaction vessel equipped with a stirring blade. When a solvent is used, the above-mentioned various dryers may be used to remove the solvent.

### (Storage Container)

The production apparatus of the present embodiment includes storage containers of a liquid base oil storage container for storing a liquid base oil and an alkaline aqueous solution storage container for storing an alkaline aqueous solution.

The form of the storage container is not particularly limited as long as it is a container capable of storing the liquid base oil and the alkaline aqueous solution.

The installation location of the storage container is preferably a place close to a place where the sulfur-atom-containing material such as the solid electrolyte raw materials, the electrolyte precursor, and the product (sulfide solid electrolyte) is circulated and leakage is likely to occur, and is preferably within a site where the apparatus for producing the sulfide solid electrolyte is disposed. More specifically, the installation location is preferably within a radius 100 m, and more preferably within a radius 50 m, centered on the reactor of the solid electrolyte raw materials.

Further, the number of each of the liquid base oil storage container and the alkaline aqueous solution storage container may be one or more. When a plurality of liquid base oil storage containers and a plurality of alkaline aqueous solution storage containers are provided, they may be provided, for example, near the distribution location of the solid electrolyte raw material, the distribution location of the electrolyte precursor, and the distribution location of each of the products.

### (Jig for Spraying or Sprinkling)

The production apparatus of the present embodiment preferably includes at least one jig selected from a jig for spraying or sprinkling a liquid base oil and a jig for spraying or sprinkling an alkaline aqueous solution. Among them, in order to perform the contact method of (i) bringing the sulfur-atom-containing material into contact with the liquid base oil by spraying or sprinkling the liquid base oil in a case where the treatment of the sulfur-atom-containing material is urgent, it is preferable to include at least a jig for spraying or sprinkling the liquid base oil.

The jig that can be used as the jig for spraying or sprinkling the liquid base oil and the jig for spraying or sprinkling the alkaline aqueous solution is as described above as the jig that can be used in the case of the contact method (i).

### (Hydrogen Sulfide Detection Device)

The production apparatus of the present embodiment preferably includes a hydrogen sulfide detection device. When the sulfur-atom-containing material is leaked, the concentration of hydrogen sulfide in the surroundings is measured by the hydrogen sulfide detection device, thereby making it possible to rapidly perform treatment while securing safety.

As the hydrogen sulfide detection device, any device can be used without particular limitation as long as it can detect hydrogen sulfide, and for example, a commercially available hydrogen sulfide detector may be used.

### [Device for Transporting Sulfur-Atom-Containing Material]

The device for transporting a sulfur-atom-containing material of the present embodiment includes a storage container A for storing at least one sulfur-atom-containing material selected from a raw material containing a sulfur atom, an electrolyte precursor containing a sulfur atom, and a sulfide solid electrolyte; and a storage container B for storing a liquid base oil.

Among the sulfur-atom-containing materials, for example, solid electrolyte raw materials such as substances containing a sulfur atom such as lithium sulfide and phosphorus sulfide, substances containing a sulfur atom such as lithium sulfate and sulfur serving as raw materials of the solid electrolyte raw materials, and sulfide solid electrolytes serving as products obtained using the solid electrolyte raw materials are assumed to be transported. The device for transporting a sulfur-atom-containing material of the present embodiment is extremely useful in transporting these sulfur-atom-containing materials.

The device for the transportation of the present embodiment is used by being loaded on, for example, a cargo bed of a truck, a railroad, a ship, or the like.

When these sulfur-atom-containing materials are leaked during transportation, it is important from the viewpoint of safety to first bring the sulfur-atom-containing material into contact with the liquid base oil by a method such as spraying or sprinkling with respect to the sulfur-atom-containing material leaked to the periphery of a cargo bed of a truck or a loading place of a ship. Therefore, the device for transporting a sulfur-atom-containing material of the present embodiment includes the storage container B for storing the liquid base oil in addition to the storage container A for storing the sulfur-atom-containing material. As described above, it can be said that the device for transporting a sulfur-atom-containing material of the present embodiment is a device focusing on the fact that the initial processing can be performed in a case where the sulfur-atom-containing material is leaked.

The form of the device for the transportation is not particularly limited as long as the device has a storage container A for storing the sulfur-atom-containing material and a storage container B for storing the liquid base oil, and, for example, a form in which a partition plate is provided in one container and the container is partitioned into the storage container A for storing the sulfur-atom-containing material and the storage container B for storing the liquid base oil by the partition plate, and a form in which the device for the transportation is constituted by the storage container A and the storage container B that are separate from each other are preferably exemplified.

As a method of using the device for the transportation of the present embodiment, for example, in a case where the device includes a storage container A for storing the sulfur-atom-containing material and a storage container B for storing the liquid base oil, when the sulfur-atom-containing material is leaked from the storage container A, the leaked sulfur-atom-containing material may be collected and charged into the storage container B, or the liquid base oil stored in the storage container B may be sprayed or sprinkled on the leaked sulfur-atom-containing material.

In addition, the device for the transportation of the present embodiment may further include at least one storage container selected from a storage container C for storing an inclusion containing a sulfur-atom-containing material and a liquid base oil and a storage container D for storing an alkaline aqueous solution.

For example, when the liquid base oil stored in the storage container B is sprayed or sprinkled on the leaked sulfur-atom-containing material, the storage container C is useful for recovering the inclusion containing the sulfur-atom-containing material and the liquid base oil and storing the inclusion. In addition, the storage container D is useful when the liquid base oil is sprayed or sprinkled to form an inclusion containing the sulfur-atom-containing material and the liquid base oil, and the inclusion is charged to perform deactivation by detoxification and to treat the liquid base oil.

The device for the transportation of the present embodiment may further include a storage container E for storing a product obtained by bringing an inclusion containing a sulfur-atom-containing material and a liquid base oil into contact with an alkaline aqueous solution. The storage container E is charged with an inclusion obtained by, for example, spraying or sprinkling the liquid base oil on the sulfur-atom-containing material, and the alkaline aqueous solution stored in the storage container D is also supplied to the storage container E, whereby the deactivation by detoxification as well as the treatment of the liquid base oil can be performed during transportation.

### [Container for Transporting Sulfur-Atom-Containing Material]

The container for transporting a sulfur-atom-containing material of the present embodiment includes at least one storage container selected from a storage part A for storing at least one sulfur-atom-containing material selected from a raw material containing a sulfur atom, an electrolyte precursor containing a sulfur atom, and a sulfide solid electrolyte; and a storage part B for storing a liquid base oil.

It can be said that the container for the transportation of the present embodiment also focuses on the fact that initial processing can be performed in a case where a sulfur-atom-containing material is leaked, similarly to the above-described device for the transportation.

As the form of the external appearance of the container for the transportation, it is preferable to have a form of a container for the transportation used for, for example, a cargo bed of a truck, a railroad, a ship, or the like in consideration of general-purpose properties. In addition, the form of the storage parts A and B is not particularly limited as long as the storage parts A and B are provided inside the container for the transportation.

For example, a form in which a partition plate is provided in one container and the container is partitioned by the partition plate into a storage part A for storing a sulfur-atom-containing material and a storage part B for storing a liquid base oil, a form in which a container constituting the storage part A and a container constituting the storage part B are separately configured are preferably exemplified.

The container for the transportation of the present embodiment may further include at least one storage part selected from a storage part C for storing an inclusion containing a sulfur-atom-containing material and a liquid base oil, and a storage part D for storing an alkaline aqueous solution, in the same manner as the above-described device for the transportation. The container for the transportation of the present embodiment may further include a storage container E for storing a contact product of an inclusion containing a sulfur-atom-containing material and a liquid base oil with an alkaline aqueous solution, in the same manner as the above-described device for the transportation.

The method of using these storage parts C to E is the same as the method of using the storage containers C to E of the device for the transportation described above.

### Examples

Hereinafter, the present invention will be specifically described with reference to Examples, but the present invention is not limited to these Examples.

### (Experimental Equipment)

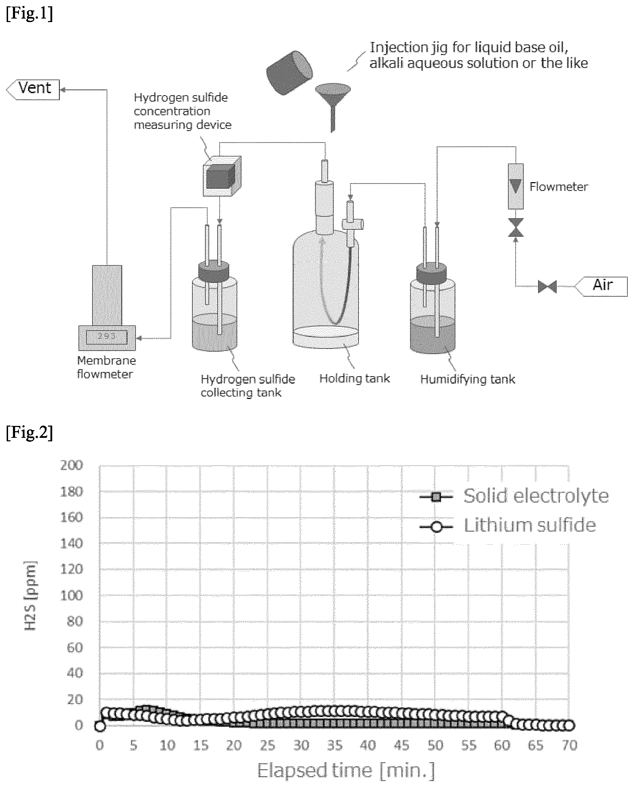

The amount (concentration) of hydrogen sulfide generated was measured using the experimental equipment shown in Fig. 1. The experimental equipment shown in Fig. 1 includes a humidifying tank in which water is held, a holding tank that holds a sulfur-atom-containing material, a hydrogen sulfide concentration measuring device, a hydrogen sulfide collecting tank, and a flowmeter. The air humidified in the humidifying tank is brought into contact with the sulfur-atom-containing material in the holding tank, so that hydrogen sulfide is generated by the moisture in the air and the sulfur-atom-containing material. The air with hydrogen sulfide is exhausted to the atmosphere after the concentration of hydrogen sulfide is measured in a hydrogen sulfide concentration measuring device and then hydrogen sulfide is collected in a hydrogen sulfide collecting tank in which a sodium hydroxide aqueous solution is held.

The behavior of hydrogen sulfide can be confirmed by injecting the liquid base oil and the alkaline aqueous solution into the holding tank from a liquid base oil injection jig and an alkaline aqueous solution injection jig, respectively, while circulating humidified air, bringing the liquid base oil and the alkaline aqueous solution into contact with the sulfur-atom-containing material, and measuring the amount of hydrogen sulfide generated (the concentration of hydrogen sulfide).

### (Example 1-1)

In a holding tank (Schlenk bottle), 0.2 g of a sulfide solid electrolyte having an argyrodite-type crystal structure was placed 50 mL of an edible oil was immediately injected so that the entire sulfide solid electrolyte was immersed, and the mixture was stirred for 30 seconds and then allowed to stand. Next, air (relative humidity: 0.3%) was started to be supplied at a flow rate of 300 cc/min, and the air was brought into contact with an inclusion containing the sulfide solid electrolyte and the edible oil in the holding tank while the humidity was set to 90% in a humidifying tank. After 60 minutes from the start of the supply of air, 50 mL of a sodium hydroxide aqueous solution (4% by mass) was further injected and stirred. Fig. 2 shows the results of measuring the concentration of hydrogen sulfide contained in the air with a measuring device.

### (Example 1-2)

An experiment was carried out in the same manner as in Example 1-1, except that lithium sulfide was used in place of the sulfide solid electrolyte in Example 1-1. Fig. 2 shows the results of measuring the concentration of hydrogen sulfide contained in the air with a measuring device.

### (Example 2-1)

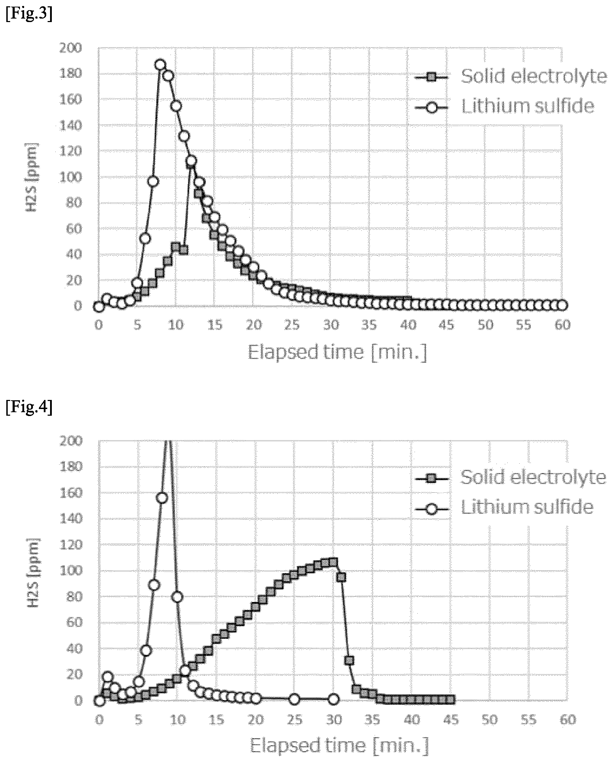

In a holding tank (Schlenk bottle), 0.2 g of a sulfide solid electrolyte having an argyrodite-type crystal structure was placed, air was started to be supplied at a flow rate of 300 cc/min, and the air was brought into contact with the sulfide solid electrolyte in the holding tank while the humidity was set to 90% in a humidifying tank. After 10 minutes from the start of the supply of air, 50 mL of an edible oil was injected, and the mixture was lightly shaken and allowed to stand. After 40 minutes from the start of the supply of air, 50 mL of a sodium hydroxide aqueous solution (4% by mass) was further injected. Fig. 3 shows the results of measuring the concentration of hydrogen sulfide contained in the air with a measuring device.

### (Example 2-2)

An experiment was carried out in the same manner as in Example 2-1, except that the sulfide solid electrolyte was changed to lithium sulfide, the injection of the edible oil was performed after 6 minutes from the start of the supply of air, and the sodium hydroxide aqueous solution was injected after 60 minutes in Example 2-1. Fig. 3 shows the results of measuring the concentration of hydrogen sulfide contained in the air with a measuring device. In Fig. 3, there is no plot of the concentration of hydrogen sulfide after 60 minutes, since the concentration of hydrogen sulfide was already 1.0 mass ppm or less, it was omitted.

### (Comparative Example 1-1)

An experiment was carried out in the same manner as in Example 1-1, except that, in Example 1-1, the supply of air was started without injecting the edible oil, and the sodium hydroxide aqueous solution was injected after 30 minutes. Fig. 4 shows the results of measuring the concentration of hydrogen sulfide contained in the air with a measuring device.

### (Comparative Example 1-2)

An experiment was carried out in the same manner as in Example 1-2, except that, in Example 1-2, the supply of air was started without injecting the edible oil, and the sodium hydroxide aqueous solution was injected after 8 minutes. Fig. 4 shows the results of measuring the concentration of hydrogen sulfide contained in the air with a measuring device.

### (Comparative Example 2-1)

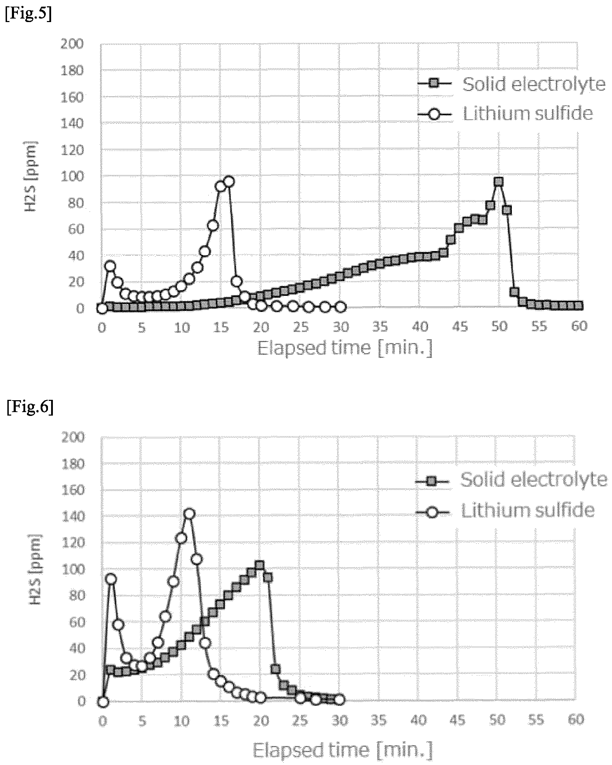

An experiment was carried out in the same manner as in Example 1-1, except that, in Example 1-1, 4 cc of slaked lime was injected instead of the edible oil, the mixture was lightly shaken after 41 minutes and 48 minutes from the start of the supply of air, and a sodium hydroxide aqueous solution was injected after 50 minutes. Fig. 5 shows the results of measuring the concentration of hydrogen sulfide contained in the air with a measuring device.

### (Comparative Example 2-2)

An experiment was carried out in the same manner as in Example 1-2, except that, in Example 1-2, 4 cc of slaked lime was injected instead of the edible oil, and a sodium hydroxide aqueous solution was injected after 15 minutes from the start of the supply of air. Fig. 5 shows the results of measuring the concentration of hydrogen sulfide contained in the air with a measuring device.

### (Comparative Example 3-1)

An experiment was carried out in the same manner as in Example 1-1, except that, in Example 1-1, 4 cc of potassium bicarbonate was injected instead of the edible oil, and a sodium hydroxide aqueous solution was injected and stirred after 20 minutes from the start of the supply of air. Fig. 6 shows the results of measuring the concentration of hydrogen sulfide contained in the air with a measuring device.

### (Comparative Example 3-2)

An experiment was carried out in the same manner as in Example 1-2, except that, in Example 1-2, 4 cc of potassium bicarbonate was injected instead of the edible oil, and a sodium hydroxide aqueous solution was injected after 10 minutes from the start of the supply of air. Fig. 6 shows the results of measuring the concentration of hydrogen sulfide contained in the air with a measuring device.

### (Comparative Example 4-1)

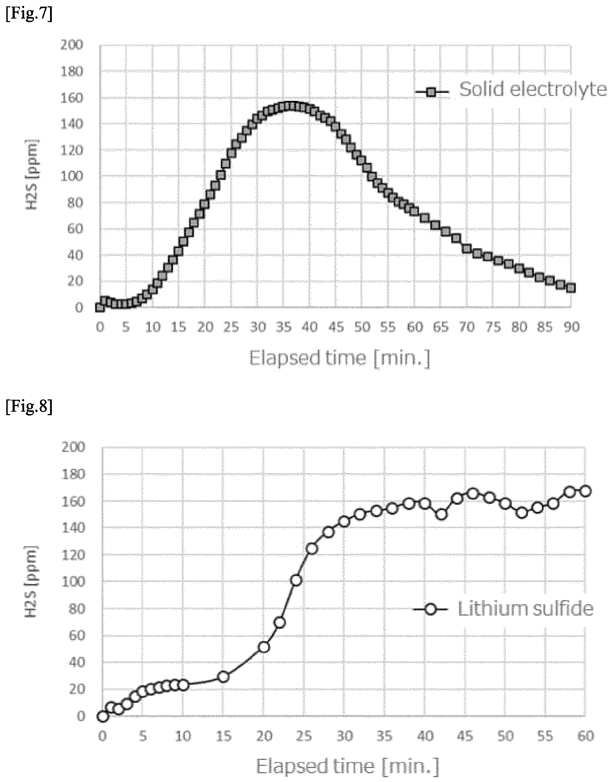

An experiment was carried out in the same manner as in Example 1-1, except that, in Example 1-1, the edible oil and the sodium hydroxide aqueous solution were not used. Fig. 7 shows the results of measuring the concentration of hydrogen sulfide contained in the air with a measuring device.

### (Comparative Example 4-2)

An experiment was carried out in the same manner as in Example 1-2, except that, in Example 1-2, the edible oil and the sodium hydroxide aqueous solution were not used, and dry air (relative humidity: 0.3%) was used as the air (the dry air was used without passing through the humidifying tank). Fig. 8 shows the results of measuring the concentration of hydrogen sulfide contained in the air with a measuring device.

From the results of Examples, it was confirmed that according to the treatment method of the present embodiment, the amount of hydrogen sulfide generated is immediately reduced by bringing the sulfur-atom-containing material into contact with the liquid base oil, and then the amount of hydrogen sulfide generated is further reduced by bringing the sulfur-atom-containing material into contact with the alkaline aqueous solution, and the sulfur-atom-containing material is completely detoxified and deactivated. In addition, after the sulfur-atom-containing material was brought into contact with the liquid base oil, the amount of hydrogen sulfide generated did not turn to increase. In Example (1-2), the amount of hydrogen sulfide generated tends to increase slightly, but this is due to the fact that lithium sulfide remains attached to the holding tank (Schlenk bottle) due to the nature of the experiment.

On the other hand, from the results of Comparative Examples, it was confirmed that when the sulfur-atom-containing material was not brought into contact with the liquid base oil, the amount of hydrogen sulfide generated only increased. It is known that the slaked lime used in Comparative Example 2 is a compound exhibiting alkalinity, but the slaked lime has a slight effect of suppressing the amount of hydrogen sulfide generated, but the effect is not enough to suppress the amount of hydrogen sulfide generated. In Comparative Example 3 using potassium bicarbonate, which is widely used as a fire extinguishing agent, it was not possible to further suppress the amount of hydrogen sulfide generated as compared with Comparative Example 2 using slaked lime. In addition, in the case of Comparative Example 4 in which the liquid base oil and the alkaline aqueous solution were not used, a large amount of hydrogen sulfide was generated, and it was confirmed that a problem occurred in terms of safety.

### Industrial Applicability

Since the method for treating a sulfur-atom-containing material of the present embodiment can safely and effectively cope with the occurrence of leakage of a sulfur-atom-containing material such as a raw material, an intermediate, and a product containing a sulfur atom, the method is suitably used in a place where the sulfur-atom-containing material is handled, for example, laboratory equipment and plant equipment provided with an apparatus for producing a sulfur-atom-containing material such as a sulfide solid electrolyte and a solid electrolyte raw material containing a sulfur atom. In addition, the device and the container for transporting the sulfur-atom-containing material of the present embodiment are suitably used for transport of a sulfur-atom-containing material by a truck, a railroad, a ship, or the like.

## Claims

1. A method for treating a sulfur-atom-containing material, the method comprising:
bringing at least one sulfur-atom-containing material selected from a raw material containing a sulfur atom, an electrolyte precursor containing a sulfur atom, and a sulfide solid electrolyte into contact with a liquid base oil; and
bringing the resulting inclusion containing the sulfur-atom-containing material and the liquid base oil into contact with an alkaline aqueous solution.

2. The method for treating a sulfur-atom-containing material according to claim 1, wherein the liquid base oil is at least one base oil selected from a base oil for a fuel oil, a base oil for a lubricating oil, and an edible oil.

3. The method for treating a sulfur-atom-containing material according to claim 1 or 2, wherein in the bringing the sulfur-atom-containing material into contact with the liquid base oil, the liquid base oil is brought into contact by spraying or sprinkling.

4. The method for treating a sulfur-atom-containing material according to claim 1 or 2, wherein in the bringing the sulfur-atom-containing material into contact with the liquid base oil, the sulfur-atom-containing material is immersed in and brought into contact with the liquid base oil.

5. The method for treating a sulfur-atom-containing material according to any one of claims 1 to 4, wherein in the bringing the sulfur-atom-containing material into contact with the liquid base oil, an amount of the liquid base oil used with respect to 0.1 L of the sulfur-atom-containing material is 0.1 L or more and 20 L or less.

6. The method for treating a sulfur-atom-containing material according to any one of claims 1 to 5, wherein the alkaline aqueous solution is an aqueous solution of at least one compound selected from a hydroxide and a carbonate of an alkali metal, and a hydroxide of an alkaline earth metal.

7. The method for treating a sulfur-atom-containing material according to any one of claims 1 to 6, wherein in the bringing the inclusion into contact with the alkaline aqueous solution, the inclusion and the alkaline aqueous solution are mixed.

8. The method for treating a sulfur-atom-containing material according to any one of claims 1 to 7, wherein a contact inclusion obtained by bringing the inclusion into contact with the alkaline aqueous solution is discarded.

9. An apparatus for producing a sulfur-atom-containing material, comprising:
a reactor for a raw material of the sulfur-atom-containing material,
a liquid base oil storage container for storing a liquid base oil, and
an alkaline aqueous solution storage container for storing an alkaline aqueous solution.

10. The apparatus for producing a sulfur-atom-containing material according to claim 9, further comprising at least one jig selected from a jig for spraying or sprinkling a liquid base oil and a jig for spraying or sprinkling an alkaline aqueous solution.

11. The apparatus for producing a sulfur-atom-containing material according to claim 9 or 10, further comprising a hydrogen sulfide detection device.

12. A device for transporting a sulfur-atom-containing material, comprising:
a storage container A for storing at least one sulfur-atom-containing material selected from a raw material containing a sulfur atom, an electrolyte precursor containing a sulfur atom, and a sulfide solid electrolyte; and
a storage container B for storing a liquid base oil.

13. A container for transporting a sulfur-atom-containing material, comprising at least one storage container selected from
a storage part A for storing at least one sulfur-atom-containing material selected from a raw material containing a sulfur atom, an electrolyte precursor containing a sulfur atom, and a sulfide solid electrolyte; and
a storage part B for storing a liquid base oil.
